**Europäisches Patentamt**

**European Patent Office**

**Office européen des brevets**

(11) Numéro de publication : **0 395 461 B1**

(12) **FASCICULE DE BREVET EUROPEEN**

(45) Date de publication du fascicule du brevet :
**23.12.92 Bulletin 92/52**

(21) Numéro de dépôt : **90400853.9**

(22) Date de dépôt : **29.03.90**

(51) Int. Cl.⁵ : **B60T 13/569,** B60T 13/52,
B60T 13/563

(54) **Servomoteur à dépression.**

(30) Priorité : **28.04.89 FR 8905661**

(43) Date de publication de la demande :
**31.10.90 Bulletin 90/44**

(45) Mention de la délivrance du brevet :
**23.12.92 Bulletin 92/52**

(84) Etats contractants désignés :
**DE ES FR GB IT**

(56) Documents cités :
**DE-A- 3 343 160**
**FR-A- 2 434 959**

(73) Titulaire : **BENDIX EUROPE Services
Techniques S.A.
126 rue de Stalingrad
F-93700 Drancy (FR)**

(72) Inventeur : **Carre, Jean-Jacques, Bendix
Europe Service Tech.
126 rue de Stalingrad
F-93700 Drancy (FR)**
Inventeur : **Castel, Philippe, Bendix Europe
Service Tech.
126 rue de Stalingrad
F-93700 Drancy (FR)**
Inventeur : **Le Normand Pascal, Bendix
Europe Service Tech.
126 rue de Stalingrad
F-93700 Drancy (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue Saint-Denis, 75001 PARIS

## Description

La présente invention concerne les servomoteurs à dépression conçus pour appliquer une force additionnelle à un organe de sortie lorsqu'une force est appliquée à un organe d'entrée s'appuyant sur l'organe de sortie. et/ou pour appliquer une force à un organe de sortie consécutivement à un signal émis par un dispositif externe au servomoteur. De tels servomoteurs sont utilisés sur les véhicules automobiles notamment pour assurer une assistance au freinage.

De façon classique, un tel servomoteur à dépression comprend un boîtier principal divisé intérieurement de manière étanche en des première et deuxième chambres par une membrane souple s'appuyant sur un disque rigide solidaire d'un piston d'actionnement. La première chambre est soumise à une basse pression tandis que la deuxième chambre est soumise soit à cette basse pression lorsque le servomoteur est au repos, soit à une pression supérieure lorsque le servomoteur est en fonctionnement.

Ces servomoteurs présentent une taille importante croissante avec l'assistance requise. Or le compartiment moteur des véhicules automobiles actuels est extrêmement rempli et il est quelquefois impossible de disposer dans ce compartiment un servomoteur dont le diamètre extérieur correspond à la puissance d'assistance demandée par le constructeur.

De ce fait, certains constructeurs utilisent un servomoteur de petites dimensions, l'assistance demandée étant obtenue alors soit en connectant la première chambre à une source de dépression plus importante que la source habituelle, soit en soumettant la deuxième chambre à une pression supérieure à la pression atmosphérique. Dans tous les cas, une pompe auxiliaire est requise, ce qui augmente sensiblement le prix de revient total du dispositif d'assistance.

La présente invention a pour but d'obvier à cet inconvénient en augmentant l'aire effective du disque d'actionnement d'un servomoteur sans augmenter l'encombrement diamétral externe.

Par ailleurs, il est souhaitable quelquefois, notamment pour éviter le patinage des roues motrices, que ces dernières soient freinées indépendamment d'une action exercée sur la pédale par le conducteur. La présente invention permet également de réaliser un servomoteur présentant cette fonction.

Pour ce faire, selon l'invention, au moins un boîtier auxiliaire est solidaire du disque rigide et fait saillie dans la première chambre, un piston auxiliaire divisant intérieurement de manière étanche le boîtier auxiliaire en des troisième et quatrième chambres, la troisième chambre étant fermée par le disque rigide et le piston auxiliaire étant monté fixe par rapport au boîtier principal.

De préférence, le boîtier auxiliaire et le piston auxiliaire sont annulaires.

Selon un premier mode de réalisation, le piston auxiliaire est monté fixe par rapport au boîtier principal au moyen d'au moins une tige rigide traversant successivement la troisième chambre, le disque rigide et éventuellement la membrane, la tige ayant une extrémité en appui sur le boîtier principal dans la deuxième chambre. Lorsque cette tige est creuse, elle peut assurer en outre la communication entre les deuxième et quatrième chambres.

Selon un autre mode de réalisation, le piston auxiliaire est monté fixe par rapport au boîtier principal au moyen d'au moins une tige rigide traversant successivement une paroi du boîtier auxiliaire et la première chambre, une extrémité de la tige rigide étant fixée fermement au boîtier principal dans la première chambre tandis que l'autre extrémité de la tige est fixée fermement au piston auxiliaire.

L'invention sera mieux comprise, et d'autres buts, avantages et caractéristiques de celle-ci apparaitront plus clairement à la lecture de la description qui suit de modes de réalisation donnés à titre non limitatif, à laquelle quatre planches de dessins sont jointes sur lesquelles :
- les Figures 1 à 4 représentent schématiquement en coupe différents modes de réalisation d'un servomoteur à aire effective augmentée conformément à l'invention.
- la Figure 5 représente schématiquement la mise en oeuvre d'un servomoteur selon l'invention dans un dispositif pour prévenir le patinage des roues motrices du véhicule.

Sur les Figures, les références numériques désignant un même objet sont identiques.

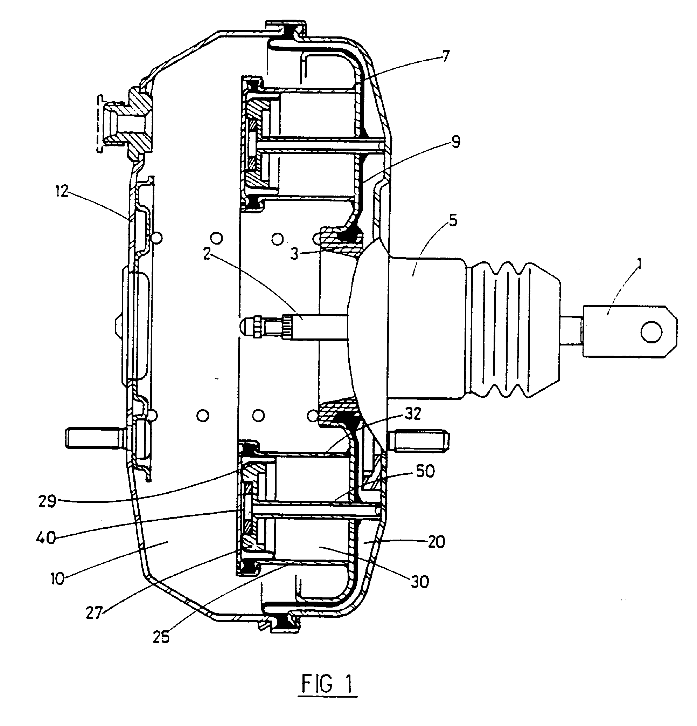

En référence maintenant à la Figure 1, le servomoteur comprend un organe d'entrée 1 par exemple relié à la pédale de frein (non représentée) du véhicule automobile ainsi équipé, et un organe de sortie 2 portant sur le piston d'un maître-cylindre (non représenté) dans l'exemple précité.

L'organe de sortie 2 est en appui sur l'organe d'entrée 1 et sur un piston d'actionnement 3.

Ce piston d'actionnement est solidaire d'un disque rigide à actionnement 7 sur lequel s'appuie une membrane à déroulement 9 divisant de façon étanche le boîtier 12 en deux chambres 10 et 20.

De façon classique la chambre 10, ou première chambre, est soumise à une basse pression, la source de dépression étant généralement commandée par le moteur thermique. La chambre 20, ou deuxième chambre, est soumise, au repos à la même basse pression que la chambre 10. Un déplacement de l'organe d'entrée 1 provoque la fermeture d'un orifice de communication entre les chambres 10 et 20 et l'ouverture d'un orifice mettant en communication l'air à la pression atmosphérique avec la chambre 20 ; cette valve bien connue, logée dans la queue 5 du servomoteur n'a pas été représentée.

L'effort résultant de l'application de la différence des pressions régnant dans les deux chambres 10 et 20 sur le disque rigide 7 fait mouvoir le piston 3 et applique à l'organe de sortie une force additionnelle dont l'amplitude est fonction de l'aire du disque d'actionnement 7.

Pour augmenter cette aire, un boîtier annulaire auxiliaire 25 est fixé dans la première chambre 10 au disque rigide 7. Un piston annulaire 27 divise intérieurement ce boîtier auxiliaire 25 en deux autres chambres 30 et 40 de façon étanche grâce à une membrane auxiliaire à déroulement 29.

Des orifices 32 font communiquer la première chambre 10 et la troisième chambre 30 qui est isolée de la deuxième chambre 20 par le disque rigide 7. Les deuxième et quatrième chambres 20,40 communiquent entre elles.

De ce fait, la surface utile sur laquelle s'exerce la différence des pressions est maintenant déterminée par la section du boîtier principal 12 auquel s'ajoute la section du boîtier auxiliaire. On obtient ainsi un servomoteur présentant un diamètre virtuel nettement supérieur à son diamètre réel.

Le piston annulaire 27 est monté fixe par rapport à la paroi de la seconde chambre 20 du boîtier 12. Au moins, une tige creuse 50 est d'une part en appui contre cette paroi et d'autre part solidaire du piston annulaire 27 permettant la mise en communication des deuxième et quatrième chambres 20,40 grâce à un orifice pratiqué dans ce piston annulaire 27. La tige creuse 50 traverse donc successivement et de manière étanche, la troisième chambre 30, le disque rigide 7 et la membrane principale 9.

En pratique, il est souhaitable de mettre en oeuvre trois ou quatre tiges creuses de ce type.

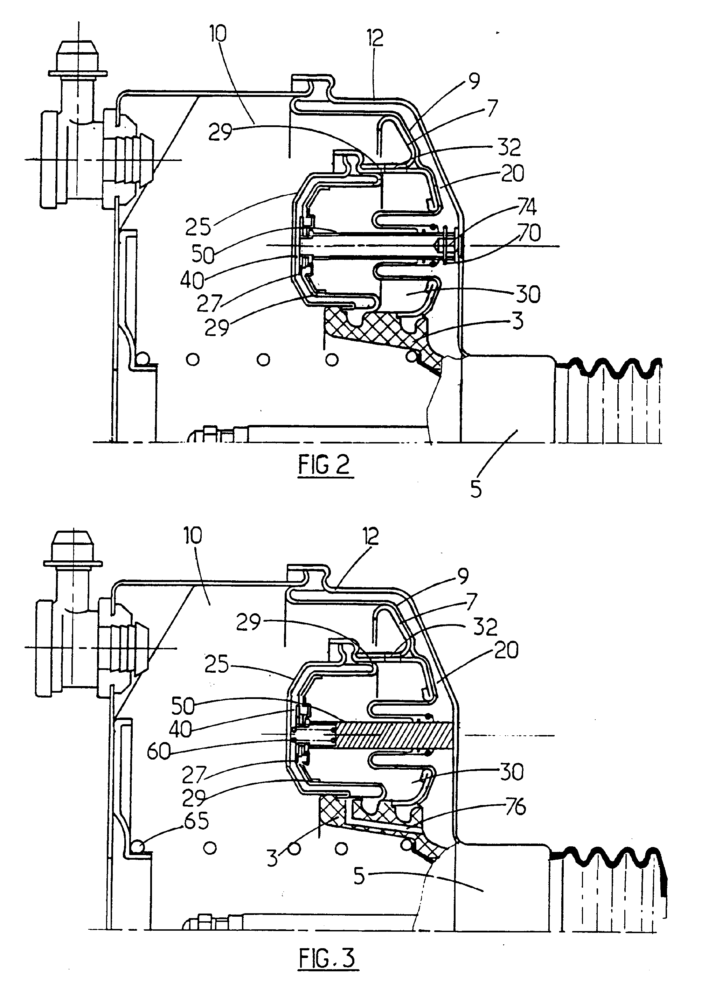

Un mode de réalisation particulièrement avantageux est illustré schématiquement et partiellement Figure 2. Sur cette Figure en coupe partielle, une clef de montage 74 présentant une extrémité en forme de pointe conique faisant saillie dans la deuxième chambre 20 est fixée au boîtier 12 en regard de la tige creuse 50. L'assemblage de l'ensemble est alors rendu extrêmement aisé. En effet, lorsqu'il s'établit une pression dans la chambre 40, le piston 27 est poussé ainsi que la tige creuse 50. Celle-ci vient alors s'empaler de façon non-étanche sur la clef 74, un moyen d'enclipsage 70 étant prévu pour éviter tout mouvement ultérieur du piston auxiliaire 27 par rapport au boîtier 12.

Par ailleurs, dans le mode de réalisation représenté sur cette Figure 2, le disque 7 affecte une forme tronconique classique, et une paroi du boîtier auxiliaire 25 est directement constituée par une partie du piston 3.

Le mode de réalisation illustré Figure 3 est très voisin du mode de réalisation de la Figure 2. Il en diffère cependant en ce que la tige 50 solidaire du piston n'est pas creuse et n'assure pas la communication entre les chambres 20 et 40. Ici cette communication est obtenue au moyen d'une canalisation 76 ménagée dans le piston 3.

D'autre part, le maintien fixe du piston auxiliaire 27 par rapport à la paroi de la seconde chambre 20 du boîtier 12 est assuré par l'effort résultant, soit de la différence des pressions appliquées entre les chambres 30 et 40 lorsque le servomoteur est actif, soit de l'effort de compression d'un ressort 60 lorsque celui-ci est au repos, ou actif en début de course. La compression du ressort 60 résulte de ce que lorsque le servomoteur est au repos, le ressort 65 présente un effort de compression résiduel suffisant pour repousser le disque rigide 7 en butée et comprimer le (ou les) ressort(s) 60. Une différence entre longueur libre et longueur comprimée de quelques millimètre du ressort 60 suffit à assurer la fonction requise.

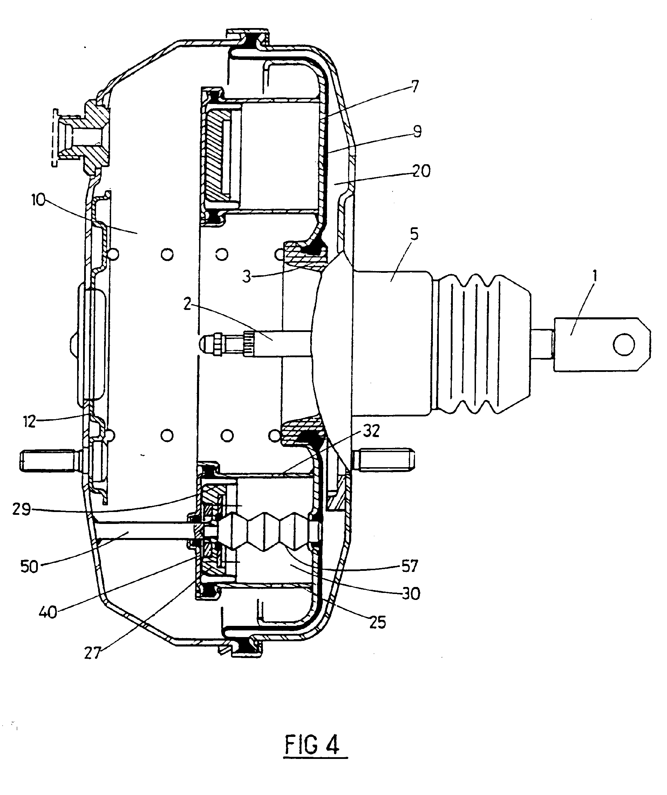

Dans le mode de réalisation représenté Figure 4, le piston annulaire 27 est solidaire de l'extrémité d'au moins une tige 50 dont l'autre extrémité est solidaire de la paroi de la première chambre 10 du boîtier principal 12. La communication entre les deuxième et quatrième chambres 20,40 est obtenue au moyen d'un soufflet élastique 57 disposé dans la troisième chambre 30, dont une extrémité est fixée à la membrane souple 9 et l'autre à un orifice pratiqué dans le piston annulaire 27.

Dans le cas présent, la tige rigide traverse une paroi du boîtier annulaire 25 de façon étanche, un joint étant prévu à cet effet.

Ici encore, il est préférable d'utiliser trois ou quatre tiges rigides de ce type pour répartir les efforts.

Bien que seuls deux modes préférés de réalisation aient été décrits, il est évident que l'homme du métier peut apporter des modifications sans sortir du cadre de la présente invention tel que défini par les revendications ci-jointes.

Bien évidemment, le mot "annulaire" pour désigner la forme du boîtier auxiliaire et du piston correspondant, se réfère à la forme classique sensiblement cylindrique de la virole du boîtier principal. Toutefois, par "annulaire", il faut entendre toute forme possible, que celle-ci soit une forme annulaire proprement dite ou, par exemple une forme ovale, qui permette à l'organe de sortie de faire saillie au centre du servomoteur. En outre, le boîtier auxiliaire peut également être constitué par une pluralité de boitiers de dimensions réduites. Enfin, le disque rigide peut affecter une forme tronconique.

La description ci-avant des modes de réalisation concerne ceux où l'on désire augmenter l'aire effective du servomoteur. Dans ce but, il était prévu que les troisième et quatrième chambres communiquent respectivement avec les première et deuxième chambres.

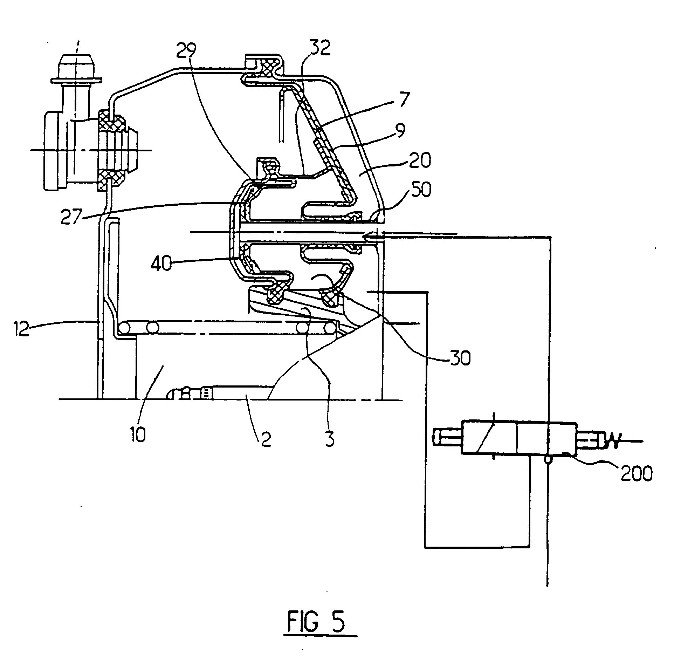

Lorsque l'on désire utiliser un tel servomoteur dans un dispositif d'antipatinage, les première et troisième chambres doivent, bien sûr, toujours communiquer. Cependant, ainsi que représenté sur la Figure 5, la communication directe entre les deuxième et quatrième chambres peut être avantageusement supprimée, la quatrième chambre étant alors reliée, par l'intermédiaire d'une canalisation et d'une électrovalve 200 à la deuxième chambre ou à une source d'air à pression atmosphérique. La différence des pressions pouvant intervenir entre les troisième et quatrième chambres est alors suffisante pour mouvoir l'organe de sortie 2 indépendamment d'une action sur la pédale de frein, la détection d'une imminence d'un patinage des roues motrices par un calculateur approprié induisant l'émission par ce calculateur d'un signal d'excitation de l'électrovalve 200 laquelle établit alors une communication directe de la chambre 40 avec l'air atmosphérique.

En l'absence d'excitation de l'électrovalve 200, le servomoteur se comporte comme un servomoteur tel que décrit plus haut.

Les modes d'applications décrits ci-dessus ne sont évidemment pas limitatifs de mises en oeuvre de l'invention.

Par exemple, la chambre auxiliaire 40 peut être mise en communication avec une source d'air sous pression appropriée présente sur le véhicule, au moyen d'une électrovalve, ou bien au travers d'une valve, telle que celle décrite dans le document FR-A-2 334 862.

## Revendications

1. Servomoteur à dépression comprenant un boîtier principal (12) divisé intérieurement de manière étanche en des première et deuxième chambres (10,20) par une membrane souple (9) s'appuyant sur un disque rigide (7) solidaire d'un piston d'actionnement (3), ladite première chambre (10) étant soumise à une basse pression tandis que ladite deuxième chambre (20) est soumise soit à la dite basse pression soit à une pression supérieure, caractérisé en ce qu'au moins un boîtier auxiliaire (25) est solidaire dudit disque rigide (7) et fait saillie dans ladite première chambre (10), un piston auxiliaire (27) divisant intérieurement de manière étanche ledit boîtier auxiliaire (25) en des troisième et quatrième chambres (30,40) ladite troisième chambre (30) étant fermée par ledit disque rigide (7), ledit piston auxiliaire (27) étant monté fixe par rapport audit boîtier principal (12).

2. Servomoteur selon la revendication 1, caractérisé en ce que le boîtier auxiliaire (25) et le piston auxiliaire (27) sont annulaires.

3. Servomoteur selon l'une quelconque des revendications 1 et 2, caractérisé en ce qu'une paroi dudit boîtier auxiliaire (25) est directement constituée par une partie du piston d'actionnement (3).

4. Servomoteur selon la revendication 1, 2 ou 3, caractérisé en ce que ledit piston auxiliaire (27) est monté fixe par rapport audit boîtier principal (12) au moyen d'au moins une tige rigide (50) traversant successivement ladite troisième chambre (30), ledit disque rigide (7) et éventuellement ladite membrane (9) ladite tige ayant une extrémité en appui sur ledit boîtier principal (12) dans ladite deuxième chambre (20).

5. Servomoteur selon la revendication 4, caractérisé en ce qu'une communication avec ladite quatrième chambre (40) est assurée au moyen de ladite tige (50) qui est creuse et d'un orifice prévu dans ledit piston auxiliaire (27).

6. Servomoteur selon la revendication 5, caractérisé en ce que la communication est assurée entre lesdites deuxième et quatrième chambres (20,40).

7. Servomoteur selon la revendication 5, caractérisé en ce qu'une électrovalve (200) assure tantôt une communication entre ladite quatrième chambre (40) et une source d'air à pression atmosphérique, tantôt une communication entre les deuxième et quatrième chambres (20,40).

8. Servomoteur selon la revendication 6, caractérisé en ce que ladite communication est assurée par une canalisation (76) ménagée dans ledit piston d'actionnement (3).

9. Servomoteur selon l'une quelconque des revendications 4 à 8, caractérisé en ce qu'une clef de montage (74) est fixée audit boîtier (12) de manière à présenter une extrémité faisant saillie dans ladite deuxième chambre (20), ladite tige (50) venant s'empaler sur ladite extrémité.

10. Servomoteur selon la revendication 9, caractérisé en ce que ladite clef de montage (74) est pourvue d'un moyen d'enclipsage (70) permettant d'éviter tout mouvement dudit piston auxiliaire (27) par rapport au boîtier (12).

11. Servomoteur selon la revendication 1, 2 ou 3, caractérisé en ce que ledit piston auxiliaire (27) est monté fixe par rapport audit boîtier principal (12) au moyen d'au moins une tige rigide (50) traversant successivement une paroi dudit boîtier auxiliaire (25) en ladite première chambre (10), une extrémité de ladite tige rigide (50) étant fixée fermement audit boîtier principal (12) dans ladite première chambre (10) tandis que l'autre extrémité de ladite tige est fixée fermement audit piston auxiliaire (27).

12. Servomoteur selon la revendication 11, caractérisé en ce qu'une communication entre lesdites deuxième et quatrième chambres (20,40) est assurée par un soufflet élastique (57) disposé dans ladite troisième chambre (30), ledit soufflet ayant une extrémité fixée à ladite membrane souple (9) et l'autre à un orifice prévu à cet effet dans ledit piston auxiliaire (27).

13. Servomoteur selon l'une quelconque des revendications 4 à 12, caractérisé en ce qu'il comporte au moins trois tiges.

14. Servomoteur selon l'une quelconque des revendications précédentes, caractérisé en ce qu'une communication entre les première et troisième chambres (10,30) est assurée par au moins un orifice (32) pratiqué dans la paroi dudit boîtier auxiliaire (25).

**Patentansprüche**

1. Unterdruckservomotor mit einem Hauptgehäuse (12), das intern durch eine nachgiebige Membran (9) dicht in eine erste und eine zweite Kammer (10, 20) unterteilt ist, die sich an einem steifen Teller (7) abstützt, der mit einem Antriebskolben (3) verbunden ist, wobei die erste Kammer (10) einem niedrigen Druck ausgesetzt ist, während die zweite Kammer (20) entweder dem genannten niedrigen Druck oder einem höheren Druck ausgesetzt ist, dadurch gekennzeichnet, daß mindestens ein Hilfsgehäuse (25) mit dem steifen Teller (7) verbunden ist und in die erste Kammer (10) vorspringt, wobei ein Hilfskolben (27) das Hilfsgehäuse (25) intern dicht in eine dritte und eine vierte Kammer (30, 40) unterteilt, wobei die dritte Kammer (30) durch den steifen Teller (7) verschlossen wird und wobei der Hilfskolben (27) fest in bezug auf das Hauptgehäuse (12) angebracht ist.

2. Servomotor nach Anspruch 1, dadurch gekennzeichnet, daß das Hilfsgehäuse (25) und der Hilfskolben (27) ringförmig sind.

3. Servomotor nach einem der Ansprüche 1 oder 2, dadurch gekennzeichnet, daß eine Seitenwand des genannten Hilfsgehäuses (25) direkt durch einen Teil des Antriebskolbens (3) gebildet ist.

4. Servomotor nach einem der Ansprüche 1, 2 oder 3, dadurch gekennzeichnet, daß der Hilfskolben (27) mittels mindestens eines steifen Stabes (50) fest mit dem Hauptgehäuse (12) verbunden ist, der aufeinanderfolgend die dritte Kammer (30), den steifen Teller (7) und eventuell die Membran (9) durchsetzt und ein Ende aufweist, das sich in der zweiten Kammer (20) auf dem Hauptgehäuse (12) abstützt.

5. Servomotor nach Anspruch 4, dadurch gekennzeichnet, daß eine Verbindung mit der vierten Kammer (40) durch den Stab (50) vorgenommen ist, der hohl ist, und durch eine Öffnung, die im genannten Hilfskolben (27) vorgesehen ist.

6. Servomotor nach Anspruch 5, dadurch gekennzeichnet, daß die Verbindung zwischen der zweiten und vierten Kammer (20, 40) vorgenommen ist.

7. Servomotor nach Anspruch 5, dadurch gekennzeichnet, daß ein Elektroventil (200) einmal für eine Verbindung zwischen der vierten Kammer (40) und einer Luftquelle unter Atmosphärendruck und einmal für eine Verbindung zwischen der zweiten und der vierten Kammer (20, 40) vornimmt.

8. Servomotor nach Anspruch 6, dadurch gekennzeichnet, daß die genannte Verbindung durch eine Leitungsanordnung (76) vorgenommen ist, die im Antriebskolben (3) ausgebildet ist.

9. Servomotor nach einem der Ansprüche 4 bis 8, dadurch gekennzeichnet, daß ein Montageschlüssel (74) so am Gehäuse (12) befestigt ist, daß er ein Ende aufweist, das in die zweite Kammer (20) vorspringt, wobei der Stab (50) von diesem Ende aufgespießt wird.

10. Servomotor nach Anspruch 9, dadurch gekennzeichnet, daß der Montageschlüssel (74) mit einer Klemmeinrichtung (70) versehen ist, die es erlaubt, jede Bewegung des Hilfskolbens (27) in bezug auf das Gehäuse (12) zu verhindern.

11. Servomotor nach einem der Ansprüche 1, 2 oder 3, dadurch gekennzeichnet, daß der Hilfskolben (27) mittels mindestens eines steifen Stabes (50) fest in bezug auf das Hauptgehäuse (12) angebracht ist, der aufeinanderfolgend eine Seitenwand des Hilfsgehäuses (25) und die erste Kammer (10) durchsetzt, wobei ein Ende des steifen Stabes (50) in der ersten Kammer (10) fest mit dem Hauptgehäuse (12) verbunden ist, während das andere Ende dieses Stabes fest mit dem Hilfskolben (27) verbunden ist.

12. Servomotor nach Anspruch 11, dadurch gekennzeichnet, daß eine Verbindung zwischen der zweiten und vierten Kammer (20, 40) durch einen elastischen Balg (57) vorgenommen wird, der in der dritten Kammer (30) angeordnet ist, und dessen eines Ende mit der nachgiebigen Membran (9) verbunden ist und dessen anderes Ende mit einer Öffnung verbunden ist, die zu diesem Zweck im Hilfskolben (27) vorgesehen ist.

13. Servomotor nach einem der Ansprüche 4 bis 12, dadurch gekennzeichnet, daß er mindestens drei Stäbe aufweist.

14. Servomotor nach einem der vorstehenden Ansprüche, dadurch gekennzeichnet, daß zwischen der ersten und dritten Kammer (10, 30) eine Verbindung durch mindestens eine Öffnung (32) vorgenommen ist, die in der Seitenwand des Hilfsgehäuses (25) ausgebildet ist.

**Claims**

1. Vacuum servomotor comprising a main casing (12) divided sealingly on the inside into first and second chambers (10, 20) by a flexible membrane (9) bearing on a rigid disk (7) integral with an activating piston (3), said first chamber (10) being subjected to a low pressure, whilst said second chamber (20) is subjected either to said low pressure or to a higher pressure, characterized in that at least one auxiliary casing (25) is integral with said rigid disk (7) and projects into said first chamber (10), an auxiliary piston (27) sealingly dividing said auxiliary casing (25) on the inside into third and fourth chambers (30, 40), said third chamber (30) being closed by said rigid disk (7), said auxiliary piston (27) being mounted stationary relative to said main casing (12).

2. Servomotor according to Claim 1, characterized in that the auxiliary casing (25) and the auxiliary piston (27) are annular.

3. Servomotor according to either of Claims 1 and 2, characterized in that a wall of said auxiliary casing (25) is formed directly by part of the activating piston (3).

4. Servomotor according to Claim 1, 2 or 3, characterized in that said auxiliary piston (27) is mounted stationary relative to said main casing (12) by means of at least one rigid rod (50) passing successively through said third chamber (30), said rigid disk (7) and, if appropriate, said membrane (9), said rod having an end bearing on said main casing (12) in said second chamber (20).

5. Servomotor according to Claim 4, characterized in that communication with said fourth chamber (40) is ensured by means of said rod (50) which is hollow and of an orifice made in said auxiliary piston (27).

6. Servomotor according to Claim 5, characterized in that communication is ensured between said second and fourth chambers (20, 40).

7. Servomotor according to Claim 5, characterized in that an electrovalve (200) ensures both communication between said fourth chamber (40) and a source of air at atmospheric pressure, and communication between the second and fourth chambers (20, 40).

8. Servomotor according to Claim 6, characterized in that said communication is ensured by a channel (76) made in said activating piston (3).

9. Servomotor according to any one of Claims 4 to 8, characterized in that a mounting key (74) is fixed to said casing (12) so as to have an end projecting into said second chamber (20), said rod (50) being impaled on said end.

10. Servomotor according to Claim 9, characterized in that said mounting key (74) is provided with a snapping means (70) which makes it possible to prevent any movement of said auxiliary piston (27) relative to the casing (12).

11. Servomotor according to Claim 1, 2 or 3, characterized in that said auxiliary piston (27) is mounted stationary relative to said main casing (12) by means of at least one rigid rod (50) passing successively through a wall of said auxiliary casing (25) in said first chamber (10), an end of said rigid rod (50) being fixed firmly to said main casing (12) in said first chamber (10), whilst the other end of said rod is fixed firmly to said auxiliary piston (27).

12. Servomotor according to Claim 11, characterized in that communication between said second and fourth chambers (20, 40) is ensured by a resilient bellows (57) disposed in said third chamber (30), said bellows having one end fixed to said flexible membrane (9) and the other end fixed to an orifice provided to this end in said auxiliary piston (27).

13. Servomotor according to any one of Claims 4 to 12, characterized in that it comprises at least three rods.

14. Servomotor according to any one of the preceding claims, characterized in that communication between the first and third chambers (10, 30) is ensured by at least one orifice (32) made in the wall of said auxiliary casing (25).

FIG 1

FIG 2

FIG. 3

FIG 4

FIG 5